# EUROPÄISCHE PATENTSCHRIFT

(11) **EP 3 047 533 B1**
(45) Veröffentlichungstag und Bekanntmachung des Hinweises auf die Patenterteilung: **04.03.2020**
(21) Anmeldenummer: 14755851.4
(22) Anmeldetag: 28.08.2014
(51) Int. Cl.: H01M 8/0662, H01M 8/04014, H01M 8/04119, B60L 50/71

(54) **ABGASANLAGE UND KRAFTFAHRZEUG MIT ABGASANLAGE**
EXHAUST GAS SYSTEM AND MOTOR VEHICLE COMPRISING AN EXHAUST GAS SYSTEM
SYSTÈME D'ÉCHAPPEMENT ET VÉHICULE AUTOMOBILE ÉQUIPÉ D'UN SYSTÈME D'ÉCHAPPEMENT

(30) Priorität: 20.09.2013 DE 102013218958
(43) Veröffentlichungstag der Anmeldung: 27.07.2016
(73) Patentinhaber: Bayerische Motoren Werke Aktiengesellschaft, 80809 München (DE)
(72) Erfinder: BAUER, Michael, 85774 Unterföhring (DE); FRISCH, Norbert, 82152 Planegg (DE); MOSER, Martin, 81371 München (DE); SCHERRER, Martin, 85586 Poing (DE); SCHMID, Johannes, 81375 München (DE)
(86) Internationale Anmeldenummer: PCT/EP2014/068298
(87) Internationale Veröffentlichungsnummer: WO 2015/039850

(56) Entgegenhaltungen:
- EP-A1- 1 959 514
- JP-A- 2010 044 960
- US-A1- 2010 003 552

## Beschreibung

Die vorliegende Erfindung betrifft eine Abgasanlage für eine mindestens eine Brennstoffzelle umfassende Vorrichtung sowie ein Kraftfahrzeug, das eine solche Abgasanlage umfasst.

In brennstoffzellenbetriebenen Vorrichtungen, wie beispielsweise Kraftfahrzeugen, und darunter auch Hybridfahrzeugen, werden das anodenseitige Abgas, das auch ein so genanntes Anoden-Purge-Gas umfasst, das im Wesentlichen Wasserstoff, Stickstoff, Argon und Wasser enthält und das kathodenseitige Abgas, das neben Sauerstoff und Stickstoff bei der Brennstoffzellenreaktion gebildetes Wasser enthält, zusammen über eine Abgasanlage an die Umgebung abgegeben.

Durch das Anoden-Purge-Gas steigt bei bestimmten Betriebspunkten die Wasserstoffkonzentration im Abgas, so dass aufwendige Maßnahmen zur Verhinderung einer Überschreitung von vorgegebenen Grenzwerten für eine Wasserstoffexposition ergriffen werden müssen. Zudem findet keine Verdünnung des Abgases statt, was insbesondere in kalten Jahreszeiten zur Formung eines Aerosols durch auskondensierendes Wasser führt und sich in einer sichtbaren Dampfwolke äußert. Auch wird das Abgas durch herkömmliche Abgasanlagen nur unzureichend vom Fahrzeug wegbefördert. Ferner nachteilig ist, dass bei zusätzlicher Verwendung von Fahrzeugkühlern und/oder Wärmetauschern separate Auslässe für die jeweilige Abluft und das Brennstoffzellenabgas vorgesehen werden, was den strukturellen Aufbau und die räumliche Anordnung der Vorrichtung verkompliziert. Die US2010/0003552A1 zeigt ein kombiniertes Heat and Power System, dessen Kondenser u.a. nicht in der Lage ist, im Winter die Bildung von Dampfwolken zu verhindern. Ein Brennstoffzellensystem in einem Kraftfahrzeug wird in der EP 1 959 514 A1 offenbart, die ebenfalls das Problem nicht lösen kann.

Ausgehend von diesem Stand der Technik ist es daher Aufgabe der vorliegenden Erfindung eine Abgasanlage für eine mindestens eine Brennstoffzelle umfassende Vorrichtung anzugeben, die sich bei einfachem strukturellem Aufbau durch eine effiziente Verdünnung des Brennstoffzellenabgases auszeichnet, wobei einer Bildung von Dampfwolken aus auskondensierendem Wasser vorgebeugt und eine aktive Beförderung von wasserstoffhaltigem Abgas weg von der Vorrichtung begünstigt wird. Ferner ist es Aufgabe der vorliegenden Erfindung ein Kraftfahrzeug mit einer Abgasanlage bereitzustellen, das eine hohe Betriebssicherheit aufweist.

Die Aufgabe wird bei einer Abgasanlage für eine mindestens eine Brennstoffzelle umfassende Vorrichtung erfindungsgemäß dadurch gelöst, dass die Abgasanlage
- mindestens eine Abgasführung zum Transportieren von Abgas der Brennstoffzelle, wobei zwischen der Abgasführung und der Brennstoffzelle eine Anodenabgasleitung zum Transportieren des anodenseitigen Abgases mit einem Anoden-Purgegasventil und einem Anodenabgas-Auslassventil vorgesehen ist,
- mindestens einen Lufteinlass zum Zuführen von Luft,
- mindestens eine Luftfördervorrichtung zum Fördern der zugeführten Luft,
- mindestens einen Wärmetauscher,
- einen Mischbereich zum Mischen von mittels der Abgasführung transportiertem Abgas der Brennstoffzelle mit der zugeführten Luft und Bilden eines Mischabgases und
- einen Mischabgasauslass zum Ausfördern des Mischabgases aus der Abgasanlage, wobei die zugeführte Luft in den Wärmetauscher einleitbar und durch diesen förderbar ist, und wobei die dabei erzielbare Erwärmung der Luft dazu führt, dass die Luft mehr Wasser aufnehmen kann und eine Bildung von Dampfwolken aus auskondensiertem Wasser verhindert wird, umfasst. Unter dem Begriff "Abgas der Brennstoffzelle" wird anodenseitiges Abgas und/oder Anoden-Purge-Gas und/oder kathodenseitiges Abgas und/oder Brennstoffzellenabgas, das ein Gemisch aus anodenseitigem Abgas und kathodenseitigem Abgas umfasst, verstanden. Durch das Durchleiten von zugeführter Luft durch den Wärmetauscher und Zusammenführen von durch den Wärmetauscher geleiteter zugeführter Luft und Abgas der Brennstoffzelle kann das aus zugeführter Luft und Abgas der Brennstoffzelle gebildete Mischabgas durch lediglich einen Auslass ausgefördert werden, so dass eine Anzahl an Abluftauslässen bzw. Abgasauslässen in der Vorrichtung effektiv reduziert wird, wobei zusätzlich eine gute räumliche Verteilung des Abgases weg von der unmittelbaren Umgebung der Vorrichtung erfolgt. Als Wärmetauscher kann beispielsweise ein Wärmetauscher eingesetzt werden, der mit einem Kühlkreislauf des Brennstoffzellensystems verbunden ist, beispielsweise den HT- oder NT- Kühlkreislauf. Ein Vorsehen separater Auslässe für Wärmetauscherabluft und Brennstoffzellenabgas ist nicht notwendig, wodurch der strukturelle Aufbau der Abgasanlage vereinfacht wird. Die Luft kann dabei aus der direkten Umgebung des Wärmetauschers und/oder der Luftfördervorrichtung, beispielsweise auch durch ein separates Luftzuleitesystem, das Frischluft oder Luft, die bei Verwendung der erfindungsgemäßen Vorrichtung in einem Kraftfahrzeug, aus einem Fahrzeuginneren stammt, zugeführt werden. Durch das Einleiten und Fördern von zugeführter Luft aus der Umgebung durch den Wärmetauscher werden eine effiziente Verdünnung des Brennstoffzellenabgases sowie eine Erwärmung der Luft erzielt, so dass die Luft mehr Wasser aufnehmen kann, damit eine Bildung von sichtbaren Dampfwolken aus auskondensiertem Wasser verhindert und eine sehr gute Verdünnung des anodenseitigen, wasserstoffhaltigen Brennstoffzellenabgases erwirkt wird, wodurch die Betriebssicherheit der Vorrichtung erhöht wird. Gesetzlich vorgegebene Grenzwerte für eine Wasserstoffexposition können somit sehr einfach ohne zusätzliche Sicherheitsmaßnahmen eingehalten werden.

Die Unteransprüche haben bevorzugte Weiterbildungen und Ausgestaltungen der Erfindung zum Inhalt.

Gemäß einer vorteilhaften Weiterbildung sind die Luftfördervorrichtung und der Wärmetauscher durch eine Luftleitung verbunden, so dass eine Luftförderstrecke gezielt eingestellt und eine Anordnung der Luftfördervorrichtung und des Wärmetauschers je nach räumlichen Gegebenheiten einfach vorgenommen werden kann.

Weiter vorteilhaft ist die Luftfördervorrichtung in einer Strömungsrichtung, also einer Strömungsrichtung der zugeführten Luft, vor, nach und/oder in dem Wärmetauscher, angeordnet. Alternativ dazu sind die Luftfördervorrichtung und der Wärmetauscher nebeneinander angeordnet. Vorzugsweise ist die Luftfördervorrichtung nach und/oder in dem Wärmetauscher angeordnet. Hierdurch kann der Luftstrom gezielt eingestellt und eine besonders effiziente Verdünnung des Abgases der Brennstoffzelle bei gleichzeitig geringem Raumbedarf erzielt werden.

Durch Anordnen eines Auslass der Abgasführung vor und/oder nach der Luftfördervorrichtung oder innerhalb der Luftfördervorrichtung, tritt das Abgas der Brennstoffzelle in unmittelbarer Nähe der Luftfördervorrichtung in die Abgasanlage ein, so dass eine Durchmischung mit zugeführter Luft frühzeitig und sehr effektiv erfolgt. Vorzugsweise ist der Auslass der Abgasführung aus Gründen des Explosionsschutzes nach der Luftfördervorrichtung angeordnet.

Weiter vorteilhaft wird das anodenseitige Abgas vor und/oder in einen Einlass der Abgasführung und/oder im Mischbereich zugeführt. Dies begünstigt eine gute Verdünnung des Anodenabgases.

Vorteilhafterweise sind der Mischabgasauslass und dessen Form, also seine Struktur und Winkelung, sowie seine Anordnung so gebildet, dass eine optimale Abgasführung, unter Berücksichtigung von Druckverlusten, Sogwirkung und Verteilung des Abgases, erzielt wird. Eine Verbesserung der Sogwirkung durch das höhere Druckniveau des Abgases der Brennstoffzelle kann vorzugsweise auch die Luftförderung durch die Luftfördervorrichtung und den Wärmetauscher bewerkstelligen oder vereinfachen, was insbesondere bei der Verwendung von inaktiven Luftfördervorrichtungen vorteilhaft ist. Durch die vorteilhafte Weiterbildung dass der Mischabgasauslass eine spiralförmige oder fächerförmige Struktur oder mindestens zwei Bereiche mit unterschiedlichen Querschnitten aufweist, wird eine bessere und feinere Verteilung des Abgases in die Umwelt erzielt. Dampfwolken aus kondensiertem Wasser werden somit effektiv vermieden.

Zur Förderung der Verdünnung des Abgases der Brennstoffzelle mit zugeführter Luft, ist vorteilhaft mindestens ein statischer Mischer, beispielsweise radial angeordnete Durchströmungsöffnungen für das Abgas, zum Durchmischen des Abgases der Brennstoffzelle mit der zugeführten Luft, vorgesehen.

Das Bilden von Dampfwolken aus auskondensiertem Wasser kann besonders effizient dadurch vermieden werden, dass der Mischbereich eine Struktur und/oder Oberflächenmodifikation, beispielsweise in Form von porösen Materialien oder Membranen, aufweist, die eine Verdunstung von im kathodenseitigen Abgas enthaltenem Wasser begünstigt.

Vorteilhaft ist ein Druckniveau in der Abgasführung größer als ein Druckniveau im Wärmetauscher und/oder der Luftfördervorrichtung, da so eine Sogwirkung auf die den Wärmetauscher durchströmende zugeführte Luft wirken kann. Dadurch wird eine Fördermenge, die Durchmischung und/oder eine Verteilung des Mischabgases in die Umgebung der Vorrichtung begünstigt.

Durch Vorsehen mindestens eines schalldämpfenden Elements kann eine akustische Optimierung der Abgasanlage erfolgen. Weiter vorteilhaft kann ein akustisches Element gleichzeitig eine Verdunstung von Wasser begünstigen.

Die Verwendung eines teilweise passiv betriebenen Wärmetauschers vereinfacht den strukturellen Aufbau der erfindungsgemäßen Abgasanlage.

Zur Erhöhung der Betriebssicherheit der Abgasanlage ist ein Abstand zwischen dem Wärmetauscher und der Abgasführung so gewählt, dass eine optimale Sogwirkung und Durchmischung des Abgases der Brennstoffzelle mit der zugeführten Luft erzielt werden. Damit wird auch der Bildung von Dampfwolken aus auskondensiertem Wasser effizient vorgebeugt.

Durch Vorsehen einer Mischvorrichtung zum Mischen des anodenseitigen Abgases und des kathodenseitigen Abgases vor oder an einem Einlass der Abgasführung unter Bildung eines Brennstoffzellenabgases, wird eine effizientere Durchmischung der anodenseitigen und der kathodenseitigen Abgase untereinander und somit auch mit der im Mischbereich zugeführten Luft, optimiert, so dass ein homogenes Mischabgas mit hoher Verdünnung von ausgeschiedenem Wasserstoff und Wasser erzielt wird, was der Betriebssicherheit der Vorrichtung zuträglich ist.

Die Betriebssicherheit der Abgasanlage kann weiter erhöht werden, wenn mindestens ein Wasserstoffsensor vorgesehen ist, wobei der Wasserstoffsensor vorzugsweise in der Abgasführung angeordnet ist. Ferner vorteilhaft umfasst die erfindungsgemäße Abgasanlage einen Wassertank, eine Wasserleitung mit einer Wasserfördervorrichtung zum Zuführen von Wasser aus dem Wassertank in die Brennstoffzelle und eine Wasserauslassleitung zum Ausfördern von Wasser aus dem Tank, wobei die Wasserauslassleitung in das kathodenseitige Abgas und/oder eine Mischvorrichtung zum Mischen des anodenseitigen Abgases und des kathodenseitigen Abgases und/oder in den Lufteinlass und/oder in den Wärmetauscher und/oder in den Mischbereich und/oder in die Abgasführung, vorzugsweise in den Lufteinlass und/oder in den Wärmetauscher und/oder in den Mischbereich, mündet. Diese Ausführungsform eignet sich insbesondere für Vorrichtungen mit mindestens einer Brennstoffzelle, die für den Betrieb flüssiges Wasser speichert und/oder abscheidet, beispielsweise für Systeme mit Wassereinspritzung im Brennstoffzellenstapel. Hierzu muss der Tankfüllstand des Tanks reguliert werden. Hierzu ist die Wasserauslassleitung vorgesehen. Ein Einmünden des Wassers aus dem Wassertank über die Wasserauslassleitung in den Wärmetauscher oder den Lufteinlass ist besonders bevorzugt, da dies die Kühlleistung des Wärmetauschers verbessert. Ferner ist auch ein Einmünden in den Mischbereich, und hier insbesondere direkt auf die Struktur und/oder Oberflächenmodifikation zur Verbesserung der Verdunstung des Wassers, vorteilhaft. Das Einmünden in den Mischbereich ist auch dadurch vorteilhaft, da die Temperaturen durch die hier kurzen Gaswege hoch sind und ein Auskondensieren im Leitungssystem daher vermieden werden kann. Um Wasser aus dem Wassertank über die Wasserleitung der Brennstoffzelle zuführen zu können, muss der Wassertank zunächst befüllt werden. Hierzu kann extern zugeführtes Wasser dienen oder aber Wasser, das bei der Kathodenreaktion entsteht, aus dem Kathodenabgas auskondensiert bzw. abgeschieden werden, beispielsweise mittels eines Wasserabscheiders, und dem Tank zugeführt werden. Die Beförderung von Wasser aus dem Tank durch die Wasserauslassleitung kann beispielsweise durch die Schwerkraft des Wassers in Kombination mit einem Ventil, durch eine aktive Förderung, beispielsweise eine Pumpe und/oder durch eine passive Förderung, beispielsweise eine Wasserstrahlpumpe, erfolgen. Weiter vorteilhaft kann das Wasser in der Wasserauslassleitung durch den Kreislauf des Wärmetauschers und/oder elektrisch beheizt werden.

Weiter ist die erfindungsgemäße Abgasanlage dadurch gekennzeichnet, dass zwischen der Abgasführung und der Brennstoffzelle eine Anodenabgasleitung zum Transportieren des anodenseitigen Abgases mit einem Anoden-Purgegasventil und einem Anodenabgas-Auslassventil vorgesehen ist. Das Anodenabgas-Auslassventil ist dabei nach dem Anoden-Purgegasventil, insbesondere an einem Ende der Anodenabgasleitung vorgesehen. Um einen Anoden-Purgevorgang durchzuführen, werden das Anoden-Purgegasventil und das Anodenabgas-Auslassventil geöffnet. Um zu vermeiden, dass in der Anodenabgasleitung hohe Wasserstoffkonzentrationen zurück bleiben, ist die Anodenabgasleitung so kurz wie möglich ausgebildet. Weiter vorteilhaft kann die Anodenabgasleitung mittels eines Falschlufteinzugs und dem durch den Venturi-Effekt am Ende der Abgasleitung entstehenden Unterdruck wasserstofffrei gehalten. Ferner kann mittels eines zusätzlichen Absperrventils der Zutritt von Luft in die Anodenabgasleitung vermieden werden.

Ebenfalls erfindungsgemäß wird auch ein Kraftfahrzeug beschrieben, das eine wie vorstehend dargelegte Abgasanlage umfasst. Das erfindungsgemäße Kraftfahrzeug zeichnet sich durch einen einfachen Aufbau, eine effiziente Abgasverteilung und eine hohe Betriebssicherheit aus.

Die für die erfindungsgemäße Abgasanlage beschriebenen vorteilhaften Effekte, Vorteile und Ausgestaltungen finden auch Anwendung auf das erfindungsgemäße Kraftfahrzeug.

Zur Vereinfachung der Anordnung der Einzelkomponenten der Abgasvorrichtung, zur Verbesserung des Abtransports von Mischabgas weg vom Kraftfahrzeug und damit auch zur Erhöhung der Betriebssicherheit des Kraftfahrzeugs, ist vorteilhafterweise vorgesehen, dass der Wärmetauscher in einem hinteren und/oder einem seitlichen Teil des Kraftfahrzeugs angeordnet ist und/oder dass der Mischabgasauslass in einem hinteren und/oder einem seitlichen Teil des Kraftfahrzeugs angeordnet ist.

Infolge der erfindungsgemäßen Ausgestaltungen der erfindungsgemäßen Abgasanlage und des erfindungsgemäßen Kraftfahrzeugs ergeben sich insbesondere folgende Vorteile:
- Die Abgasanlage weist eine kompakte und einfache Struktur auf.
- Es wird eine effiziente Verdünnung von Wasserstoff aus dem anodenseitigen Abgas der Brennstoffzelle erzielt.
- Vorgegebene Grenzwerte für eine Wasserstoffexposition können einfacher und zuverlässiger eingehalten werden.
- Das Mischabgas wird aktiv von der Vorrichtung wegbefördert.
- Eine Bildung von Dampfwolken aus auskondensiertem Wasser wird durch eine Verdünnung mit Luft, insbesondere durch Passieren des Wärmetauschers, verringert.
- Feuchte Luft wird mit höherer Geschwindigkeit von der Vorrichtung wegbefördert.
- Es wird eine homogene und räumlich gut verteilte Ausförderung des Mischabgases erzielt.
- Kondenswasser kann optimal verdampft werden.
- Die Aufnahmefähigkeit von Wasser im Luftstrom, der den Wärmetauscher verlässt, ist aufgrund der Erwärmung erhöht.
- Die Sogwirkung des kathodenseitigen Abgases erleichtert die Förderung von zusätzlicher Luft durch den Wärmetauscher.
- Auch bei ausgeschalteter Luftfördervorrichtung kann, aufgrund der Sogwirkung, Luft durch den Wärmetauscher befördert werden.
- Der Brennstoffzellenabgasauslass und Wärmetauscherauslass zum Ausfördern der durch den Wärmetauscher geleiteten Luft, werden durch ein Bauteil gebildet.
- Es kann auf eine zusätzliche Mischvorrichtung nach Zuführung des anodenseitigen Abgases verzichtet werden.
- Ein Verzicht auf einen Wasserstoffsensor ist bei hoher Betriebssicherheit der Vorrichtung einfach möglich.

Weitere Einzelheiten, Merkmale und Vorteile der Erfindung ergeben sich aus der nachfolgenden Beschreibung und den Figuren. Es zeigen:
- Figur 1: eine schematische Ansicht einer Abgasanlage gemäß einer ersten vorteilhaften Weiterbildung der Erfindung und
- Figur 2: eine schematische Ansicht einer Abgasanlage einer zweiten vorteilhaften Weiterbildung der Erfindung von vorne seitlich.

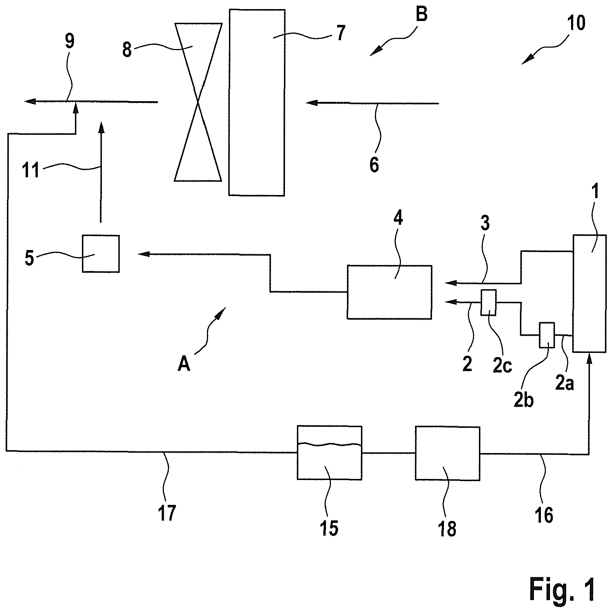

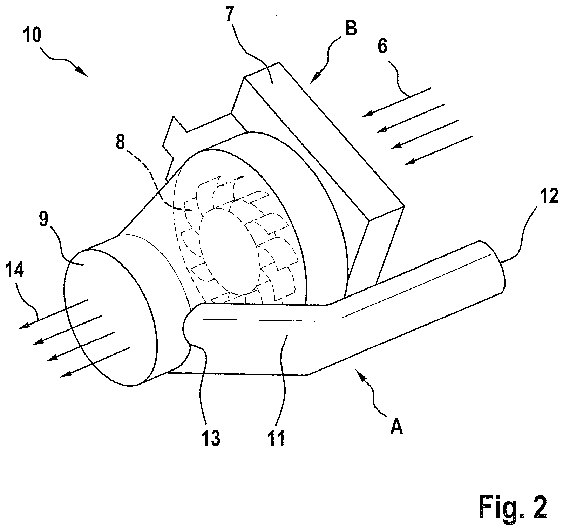

Anhand von Figuren 1 und 2 werden zwei Ausgestaltungen der erfindungsgemäßen Abgasanlage im Detail beschrieben. In den Figuren sind nur die hier interessierenden Aspekte der vorliegenden Erfindung dargestellt, alle übrigen Aspekte sind der Übersichtlichkeit halber weggelassen. Ferner stehen gleiche Bezugszeichen für gleiche Bauteile.

Im Einzelnen zeigt Figur 1 eine Abgasanlage 10 für eine mindestens eine Brennstoffzelle 1 umfassende Vorrichtung. Im Sinne der Erfindung kann an die Abgasanlage 10 auch ein Brennstoffzellensystem mit mehreren, hintereinander und/oder parallel geschalteten, Brennstoffzellen angeschlossen sein.

Die Brennstoffzelle 1 erzeugt anodenseitiges Abgas 2 und kathodenseitiges Abgas 3, das als Gemisch als Brennstoffzellenabgas definiert wird. Das anodenseitige Abgas 2 enthält im Wesentlichen Wasserstoff, Stickstoff, Argon und Wasser. Das kathodenseitige Abgas 3 enthält hingegen im Wesentlichen Sauerstoff, Stickstoff und Wasser, das bei der Brennstoffzellenreaktion entsteht.

Das anodenseitige Abgas 2 wird über eine Anodenabgasleitung 2a aus der Brennstoffzelle 1 ausgeführt. Die Anodenabgasleitung 2a umfasst ferner ein Anoden-Purgegasventil 2b und ein Anodenabgas-Auslassventil 2c. das Anodenabgas-Auslassventil 2c ist dabei nach dem Anoden-Purgegasventil 2b, insbesondere an einem Ende der Anodenabgasleitung 2a vorgesehen. Um einen Anoden-Purgevorgang unter Bildung eines Anoden-Purgegases durchzuführen, werden das Anoden-Purgegasventil 2b und das Anodenabgas-Auslassventil 2c geöffnet.

Die zunächst separat gehaltenen anodenseitigen und kathodenseitigen Abgase 2, 3 der Brennstoffzelle 1, inklusive Anoden-Purgegas, werden in einer Mischvorrichtung 4, die als statische oder aktive Mischvorrichtung ausgebildet sein kann, miteinander vermischt und bilden ein Brennstoffzellenabgas, das einem Wasserstoffsensor 5 zugeleitet wird.

Der Wasserstoffsensor 5 ermittelt die Konzentration an Wasserstoff in dem Brennstoffzellenabgas. Somit kann gesichert werden, dass die Wasserstoffkonzentration einen zulässigen Grenzwert nicht überschreitet. Ggf. können Sicherheitsvorkehrungen getroffen sein, die im Falle einer Überschreitung eines zulässigen Grenzwertes für die Wasserstoffkonzentration, eine Ausleitung des Brennstoffzellenabgases in die Umgebung verhindern und/oder eine Verdünnung des wasserstoffbelasteten Gasgemisches erhöht.

Nach Durchleiten des Brennstoffzellenabgases durch den mit einem Wasserstoffsensor 5 ausgestatteten Bereich, wird das Brennstoffzellenabgas über eine Abgasführung 11 einem Mischbereich 9 zugeleitet.

Ferner umfasst die Abgasanlage 10 einen Wassertank 15, eine Wasserleitung 16 mit einer Wasserfördervorrichtung 18 zum Zuführen von Wasser aus dem Wassertank 15 in die Brennstoffzelle 1 und eine Wasserauslassleitung 17 zum Ausfördern von Wasser aus dem Wassertank 15. Die Wasserauslassleitung 17 mündet hier beispielhaft ebenfalls in den Mischbereich 9. Das in dem Wassertank 15 enthaltene Wasser kann extern zugeführtes Wasser oder Wasser, das bei der Kathodenreaktion entsteht, und aus dem kathodenseitigen Abgas 3 abgeschieden oder auskondensiert wird, sein. Hierzu kann in das kathodenseitige Abgas 3 beispielsweise ein Kondensator oder Wasserabscheider eingebrachten werden.

In einem von dem Brennstoffzellenabgasströmungsweg A separatem Luftströmungsweg B wird Luft, also Frischluft aus der Umgebung der Abgasanlage 10, über einen Lufteinlass 6 zugeleitet und einem Wärmetauscher 7 zugeführt. Die Luft kann dabei aus der direkten Umgebung des Wärmetauschers 7 stammen, oder über eine Luftleitung zugeführt werden. An den Wärmetauscher 7 schließt sich eine Luftfördervorrichtung 8 an, die die zugeführte Frischluft dem Mischbereich 9 zuleitet. Wie bereits ausgeführt, mündet in diesen Mischbereich 9 auch ein Auslass der Abgasführung 11 des Brennstoffzellenabgases.

Im Mischbereich 9 findet eine Durchmischung von über den Brennstoffzellenabgasströmungsweg A zugeführtem Brennstoffzellenabgas mit der über den Luftströmungsweg B zugeführten Luft und aus der Wasserauslassleitung 17 gefördertem Wasser aus dem Wassertank 15, statt. Eine zusätzliche Mischvorrichtung, insbesondere ein statischer Mischer, kann hierfür vorgesehen sein. Die zugeführte Luft wird durch die durch den Brennstoffzellenabgasstrom erzeugte Sogwirkung in den Mischbereich 9 gesaugt, so dass eine effiziente Durchmischung erfolgt. Diese kann durch eine aktive Förderung durch die Luftfördervorrichtung 8 verstärkt werden.

So wird das Brennstoffzellenabgas mit Luft verdünnt, wodurch ein Mischabgas gebildet wird, wobei die Wasserstoffkonzentration im Mischabgas gesenkt und auch eine Verteilung von auskondensiertem Wasser im Mischabgas gefördert wird, so dass in kalten Jahreszeiten eine Bildung von Dampfwolken von auskondensiertem Wasser verhindert wird. Zulässige Grenzwerte für eine Wasserstoffexposition in die Umwelt können einfach eingehalten werden.

Durch Integration des Wärmetauscherauslasses zum Ausfördern der durch den Wärmetauscher geleiteten Luft in die Abgasanlage, in die auch der Auslass des Brennstoffzellenabgases mündet, kann auf separate Auslässe für die jeweiligen Abgase verzichtet werden. Damit vereinfacht sich der strukturelle Aufbau der Abgasanlage.

Figur 2 zeigt eine Abgasanlage 10 für eine mindestens eine Brennstoffzelle umfassende Vorrichtung. Im Luftströmungsweg B sind hintereinander angeordnet: einen Lufteinlass 6 zum Zuführen von Luft, also Frischluft aus der Umgebung der Abgasanlage 10, ein Wärmetauscher 7, der die zugeführten Luft erwärmt, und eine Luftfördervorrichtung 8 zum Fördern der zugeführten Luft. Die zugeführte Luft wird durch die angegebenen Komponenten einem Mischbereich 9 zugeleitet.

In den Mischbereich 9 mündet auch ein Auslass 13 der Abgasführung 11, die in diesem Ausführungsbeispiel dem Transport von Brennstoffzellenabgas aus Anoden-Purge-Gas, anodenseitigem und kathodenseitigem Abgas der Brennstoffzelle, dient. Das Brennstoffzellenabgas wird hierbei über einen Einlass 12 der Abgasführung 11 zugeführt.

Im Mischbereich 9 findet sodann eine Durchmischung von mittels der Abgasführung 11 transportiertem Brennstoffzellenabgas mit der durch die Luftfördervorrichtung 8 geförderten Luft und Bilden eines Mischabgases statt. Das Mischabgas aus nun verdünntem Brennstoffzellenabgas, also im Wesentlichen mit Luft verdünntem Wasserstoff, Argon, Sauerstoff und auskondensiertem Wasser, wird über einen Mischabgasauslass 14 aus der Abgasanlage 10 ausgefördert und im Umfeld der Abgasanlage 10 verteilt. Grenzwerte für eine Wasserstoffexposition können damit sehr einfach eingehalten werden.

Die Einzelkomponenten, also insbesondere die Abgasführung 11, der Auslass 13 der Abgasführung 11, die Struktur und Anordnung des Wärmetauschers 7 und der Luftfördervorrichtung 8 sowie die Ausformung des Mischbereichs 9, werden im Hinblick auf eine optimale Sogwirkung und Durchmischung des zu fördernden Abgasstroms strukturiert und angeordnet, so dass das Mischabgas homogen durchmischt und effizient und weiträumig in eine Umgebung der Abgasanlage 10 verteilt wird. Zusätzliche Modifikationen oder Oberflächenstrukturen, insbesondere im Mischbereich 9, können eine Dampfwolkenbildung von kondensiertem Wasser zusätzlich minimieren.

Vorzugsweise können weitere Mischvorrichtungen, insbesondere im Mischbereich 9 und/oder schalldämpfende Elemente vorgesehen sein.

Die vorhergehende Beschreibung der vorliegenden Erfindung dient nur zu illustrativen Zwecken und nicht zum Zwecke der Beschränkung der Erfindung. Im Rahmen der Erfindung sind verschiedene Änderungen und Modifikationen möglich, ohne den Umfang der Erfindung wie sie in den Ansprüchen festgelegt ist zu verlassen.

### Bezugszeichenliste:

- 1: Brennstoffzelle
- 2: anodenseitiges Abgas
- 2a: Anodenabgasleitung
- 2b: Anoden-Purgegasventil
- 2c: Anodenabgas-Auslassventil
- 3: kathodenseitiges Abgas
- 4: Mischvorrichtung
- 5: Wasserstoffsensor
- 6: Lufteinlass
- 7: Wärmetauscher
- 8: Luftfördervorrichtung
- 9: Mischbereich
- 10: Abgasanlage
- 11: Abgasführung
- 12: Einlass der Abgasführung
- 13: Auslass der Abgasführung
- 14: Mischabgasauslass
- 15: Wassertank
- 16: Wasserleitung
- 17: Wasserauslassleitung
- 18: Wasserfördervorrichtung
- A: Brennstoffzellenabgasströmungsweg
- B: Luftströmungsweg

## Patentansprüche

1. Abgasanlage für eine mindestens eine Brennstoffzelle (1) umfassende Vorrichtung, umfassend:
- mindestens eine Abgasführung (11) zum Transportieren von Abgas (2, 3) der Brennstoffzelle (1), wobei zwischen der Abgasführung (11) und der Brennstoffzelle (1) eine Anodenabgasleitung (2a) zum Transportieren des anodenseitigen Abgases (2) mit einem Anoden-Purgegasventil (2b) und einem Anodenabgas-Auslassventil (2c) vorgesehen ist,
- mindestens einen Lufteinlass (6) zum Zuführen von Frischluft aus der Umgebung,
- mindestens eine Luftfördervorrichtung (8) zum Fördern der zugeführten Luft,
- mindestens einen Wärmetauscher (7),
- einen Mischbereich (9) zum Mischen von mittels der Abgasführung (11) transportiertem Abgas (2, 3) der Brennstoffzelle (1) mit der zugeführten Luft und Bilden eines Mischabgases, und
- einen Mischabgasauslass (14) zum Ausfördern des Mischabgases aus der Abgasanlage (10),
wobei die zugeführte Luft in den Wärmetauscher (7) einleitbar und durch diesen förderbar ist, und wobei die dabei erzielbare Erwärmung der Luft dazu führt, dass die Luft mehr Wasser aufnehmen kann und eine Bildung von Dampfwolken aus auskondensiertem Wasser verhindert wird.

2. Abgasanlage nach Anspruch 1, **dadurch gekennzeichnet, dass** die Luftfördervorrichtung (8) in einer Strömungsrichtung vor, nach und/oder im Wärmetauscher (7), angeordnet ist und/oder dass die Luftfördervorrichtung (8) und der Wärmetauscher (7) nebeneinander angeordnet sind, wobei die Luftfördervorrichtung (8) vorzugsweise nach und/oder im Wärmetauscher (7) angeordnet ist.

3. Abgasanlage nach einem der vorhergehenden Ansprüche, **dadurch gekennzeichnet, dass** ein Auslass der Abgasführung (13) vor der Luftfördervorrichtung (8) oder innerhalb der Luftfördervorrichtung (8) angeordnet ist, und/oder
dass das anodenseitige Abgas (2) vor und/oder in einen Einlass der Abgasführung (12) und/oder im Mischbereich (9) zugeführt wird.

4. Abgasanlage nach einem der vorhergehenden Ansprüche, **dadurch gekennzeichnet, dass** der Mischabgasauslass (14) eine spiralförmige oder fächerförmige Struktur oder mindesten zwei Bereiche mit unterschiedlichen Querschnitten aufweist.

5. Abgasanlage nach einem der vorhergehenden Ansprüche, ferner umfassend mindestens einen statischen Mischer zum Durchmischen des Abgases der Brennstoffzelle (1) mit der zugeführten Luft.

6. Abgasanlage nach einem der vorhergehenden Ansprüche, **dadurch gekennzeichnet, dass** der Mischbereich (14) eine Struktur und/oder Oberflächenmodifikation aufweist, die eine Verdunstung von im kathodenseitigen Abgas (3) enthaltenem Wasser begünstigt.

7. Abgasanlage nach einem der vorhergehenden Ansprüche, **dadurch gekennzeichnet, dass** ein Druckniveau in der Abgasführung (11) größer ist als ein Druckniveau in dem Wärmetauscher (7) und/oder der Luftfördervorrichtung (8).

8. Abgasanlage nach einem der vorhergehenden Ansprüche, ferner umfassend mindestens ein schalldämpfendes Element.

9. Abgasanlage nach einem der vorhergehenden Ansprüche, **dadurch gekennzeichnet, dass** der Wärmetauscher (7) ein teilweise passiv betriebener Wärmetauscher ist.

10. Abgasanlage nach einem der vorhergehenden Ansprüche, **dadurch gekennzeichnet, dass** ein Abstand zwischen dem Wärmetauscher (7) und der Abgasführung (11) so gewählt ist, dass eine optimale Sogwirkung und Durchmischung des Abgases der Brennstoffzelle mit der zugeführten Luft erzielt werden.

11. Abgasanlage nach einem der vorhergehenden Ansprüche, ferner umfassend eine Mischvorrichtung (4) zum Mischen des anodenseitigen Abgases (2) und des kathodenseitigen Abgases (3) vor oder an einem Einlass der Abgasführung (12), und/oder
ferner umfassend mindestens einen Wasserstoffsensor (5), wobei der Wasserstoffsensor (5) vorzugsweise in der Abgasführung (11) angeordnet ist.

12. Abgasanlage nach einem der vorhergehenden Ansprüche, ferner umfassend einen Wassertank (15), eine Wasserleitung (16) mit einer Wasserfördervorrichtung (18) zum Zuführen von Wasser aus dem Wassertank in die Brennstoffzelle (1) und eine Wasserauslassleitung (17) zum Ausfördern von Wasser aus dem Wassertank (15), wobei die Wasserauslassleitung (17) in das kathodenseitige Abgas (3) und/oder eine Mischvorrichtung (4) zum Mischen des anodenseitigen Abgases (2) und des kathodenseitigen Abgases (3) und/oder in den Lufteinlass (6) und/oder in den Wärmetauscher (7) und/oder in den Mischbereich (9) und/oder in die Abgasführung (11), vorzugsweise in den Lufteinlass (6) und/oder in den Wärmetauscher (7) und/oder in den Mischbereich (9) mündet.

13. Kraftfahrzeug umfassend eine Abgasanlage (10) nach einem der vorhergehenden Ansprüche.

14. Kraftfahrzeug nach Anspruch 13, **dadurch gekennzeichnet, dass** der Wärmetauscher (7) in einem hinteren und/oder einem seitlichen Teil des Kraftfahrzeugs angeordnet ist und/oder dass der Mischabgasauslass (14) in einem hinteren und/oder einem seitlichen Teil des Kraftfahrzeugs angeordnet ist.

## Claims

1. An exhaust gas system for a device comprising at least one fuel cell (1), said system comprising
- at least one exhaust gas duct (11) for transporting exhaust gas (2, 3) of the fuel cell (1), wherein an anode exhaust gas line (2a) for transporting the anode-side exhaust gas (2) is provided between the exhaust gas duct (11) and the fuel cell (1) and has an anode purging gas valve (2b) and an anode exhaust gas outlet valve (2c),
- at least one air inlet (6) for supplying fresh air from the surrounding environment,
- at least one air-conveying device (8) for conveying the supplied air,
- at least one heat exchanger (7),
- a mixing region (9) for mixing exhaust gas (2, 3) of the fuel cell (1), transported by means of the exhaust gas duct (11), with the supplied air and forming a mixed exhaust gas, and
- a mixed exhaust gas outlet (14) for discharging the mixed exhaust gas from the exhaust system (10),
wherein the supplied air can be introduced into the heat exchanger (7) and can be conveyed through the same, and wherein the heating of the air that is thus attainable causes the air to be able to absorb more water and prevents a formation of clouds of vapour created as a result of condensed water.

2. An exhaust gas system according to claim 1, **characterised in that** the air-conveying device (8), is arranged before, after and/or in the heat exchanger (7), in a flow direction, and/or **in that** the air-conveying device (8) and the heat exchanger (7) are arranged adjacently to one another, wherein the air-conveying device (8) is preferably arranged after and/or in the heat exchanger (7).

3. An exhaust gas system according to one of the preceding claims, **characterised in that** an outlet of the exhaust gas duct (13) is arranged before the air-conveying device (8) or within the air-conveying device (8), and/or
**in that** the anode-side exhaust gas (2) is supplied before and/or in an inlet of the exhaust gas duct (12) and/or in the mixing region (9).

4. An exhaust gas system according to one of the preceding claims, **characterised in that** the mixed exhaust gas outlet (14) has a spiralled or fan-shaped structure or at least two regions with different cross-sections.

5. An exhaust gas system according to one of the preceding claims, further comprising at least one static mixer for mixing the exhaust gas of the fuel cell (1) with the supplied air.

6. An exhaust gas system according to one of the preceding claims, **characterised in that** the mixing region (14) has a structure and/or a surface modification that promotes an evaporation of water contained in the cathode-side exhaust gas (3).

7. An exhaust gas system according to one of the preceding claims, **characterised in that** a pressure level in the exhaust gas duct (11) is greater than a pressure level in the heat exchanger (7) and/or the air-conveying device (8).

8. An exhaust gas system according to one of the preceding claims, further comprising at least one sound-damping element.

9. An exhaust gas system according to one of the preceding claims, **characterised in that** the heat exchanger (7) is a partially passively operated heat exchanger.

10. An exhaust gas system according to one of the preceding claims, **characterised in that** a distance between the heat exchanger (7) and the exhaust gas duct (11) is selected such that an optimal suction effect and mixing of the exhaust gas of the fuel cell with the supplied air are attained.

11. An exhaust gas system according to one of the preceding claims, further comprising a mixing device (4) for mixing the anode-side exhaust gas (2) and the cathode-side exhaust gas (3) before or at an inlet of the exhaust gas duct (12), and/or further comprising at least one hydrogen sensor (5), wherein the hydrogen sensor (5) is preferably arranged in the exhaust gas duct (11).

12. An exhaust gas system according to one of the preceding claims, further comprising a water tank (15), a water line (16) with a water-conveying device (18) for supplying water from the water tank into the fuel cell (1), and a water outlet line (17) for discharging water from the water tank (15), wherein the water outlet line (17) opens out into the cathode-side exhaust gas (3) and/or a mixing device (4) for mixing the anode-side exhaust gas (2) and the cathode-side exhaust gas (3) and/or into the air inlet (6) and/or into the heat exchanger (7) and/or into the mixing region (9) and/or into the exhaust gas duct (11), preferably into the air inlet (6) and/or into the heat exchanger (7) and/or into the mixing region (9) .

13. A motor vehicle comprising an exhaust gas system (10) according to one of the preceding claims.

14. The motor vehicle according to claim 13, **characterised in that** the heat exchanger (7) is arranged in a rear and/or a side part of the motor vehicle, and/or **in that** the mixed exhaust gas outlet (14) is arranged in a rear and/or a side part of the motor vehicle.

## Revendications

1. Installation de gaz d'échappement destinée à un dispositif comprenant au moins une pile à combustible (1) comportant :
- au moins un conduit d'évacuation des gaz d'échappement (11) permettant de transporter des gaz d'échappement (2, 3) de la pile à combustible (1), entre le conduit d'évacuation des gaz d'échappement (11) et la pile à combustible (1) étant prévue une ligne d'échappement d'anode (2a) permettant de transporter les gaz d'échappement (2) côté anode comportant une soupape de purge des gaz d'anode (2b) et une soupape de sortie des gaz d'échappement d'anode (2c),
- au moins une entrée d'air (6) permettant de fournir de l'air frais provenant de l'environnement,
- au moins un dispositif de refoulement d'air (8) permettant de refouler l'air fourni,
- au moins un échangeur de chaleur (7),
- une zone de mélange (9) permettant de mélanger les gaz d'échappement (2, 3) de la pile à combustible (1) transportés au moyen du conduit d'évacuation des gaz d'échappement (11) avec l'air fourni et de former des gaz d'échappement mélangés, et
- une sortie des gaz d'échappement mélangés (14) permettant de refouler les gaz d'échappement mélangés hors de l'installation de gaz d'échappement (10),
l'air fourni pouvant être introduit dans l'échangeur de chaleur (7) et refoulé par celui-ci, et le chauffage de l'air pouvant ainsi être obtenu permettant à cet air de capter plus d'eau et empêchant la formation de nuages de vapeur à partir d'eau condensée.

2. Installation de gaz d'échappement conforme à la revendication 1,
**caractérisée en ce que**
le dispositif de refoulement d'air (8) est installé dans la direction de circulation en amont, en aval et/ou dans l'échangeur de chaleur (7), et/ou le dispositif de refoulement d'air (8) et l'échangeur de chaleur (7) sont installés au voisinage l'un de l'autre, le dispositif de refoulement d'air (8) étant de préférence installé en aval et/ou dans l'échangeur de chaleur (7).

3. Installation de gaz d'échappement conforme à l'une des revendications précédentes,
**caractérisée en ce qu'**
une sortie (13) du conduit d'évacuation des gaz d'échappement est installée en amont du dispositif de refoulement d'air (8) ou à la partie interne du dispositif de refoulement d'air (8), et/ou
les gaz d'échappement (2) côté anode sont fournis en amont et/ou dans une entrée du conduit d'évacuation des gaz d'échappement (12) et/ou dans la zone de mélange (9).

4. Installation de gaz d'échappement conforme à l'une des revendications précédentes,
**caractérisée en ce que**
la sortie des gaz d'échappement mélangés (14) a une structure en forme de spirale ou en forme d'éventail ou comporte au moins deux zones ayant des sections différentes.

5. Installation de gaz d'échappement conforme à l'une des revendications précédentes,
comprenant en outre au moins un mélangeur statique permettant de mélanger les gaz d'échappement de la pile à combustible (1) avec l'air fourni.

6. Installation de gaz d'échappement conforme à l'une des revendications précédentes,
**caractérisée en ce que**
la zone de mélange (14) a une structure et/ou une modification de surface qui favorise(nt) l'évaporation de l'eau renfermée dans les gaz d'échappement (3) côté cathode.

7. Installation de gaz d'échappement conforme à l'une des revendications précédentes,
**caractérisée en ce que**
le niveau de pression dans le conduit d'évacuation des gaz d'échappement (11) est supérieur au niveau de pression dans l'échangeur de chaleur (7) et/ou dans le dispositif de refoulement d'air (8).

8. Installation de gaz d'échappement conforme à l'une des revendications précédentes,
comprenant en outre au moins un élément d'insonorisation.

9. Installation de gaz d'échappement conforme à l'une des revendications précédentes,
**caractérisée en ce que**
l'échangeur de chaleur (7) est un échangeur de chaleur à actionnement partiellement passif.

10. Installation de gaz d'échappement conforme à l'une des revendications précédentes,
**caractérisée en ce que**
la distance entre l'échangeur de chaleur (7) et le conduit d'évacuation des gaz d'échappement (11) est sélectionnée de façon à obtenir un effet d'aspiration et un mélange optima des gaz d'échappement de la pile à combustible avec l'air fourni.

11. Installation de gaz d'échappement conforme à l'une des revendications précédentes,
comprenant en outre un dispositif de mélange (4) permettant de mélanger les gaz d'échappement (2) côté anode et les gaz d'échappement (3) côté cathode (3) en amont ou au niveau de l'entrée (12) du conduit d'évacuation des gaz d'échappement, et/ou
comprenant en outre au moins un capteur d'hydrogène (5), ce capteur d'hydrogène (5) étant, de préférence, installé dans le conduit d'évacuation des gaz d'échappement (11).

12. Installation de gaz d'échappement conforme à l'une des revendications précédentes,
comprenant en outre un réservoir d'eau (15), une ligne d'eau (16) avec un dispositif de refoulement d'eau (18) permettant de fournir de l'eau provenant du réservoir d'eau à la pile à combustible (1) et une ligne de sortie d'eau (17) permettant de refouler de l'eau hors du réservoir d'eau (15), la ligne de sortie d'eau (17) débouchant dans les gaz d'échappement côté cathode (3) et/ou dans un dispositif de mélange (4) permettant de mélanger les gaz d'échappement (2) côté anode et les gaz d'échappement côté cathode (3) et/ou dans l'entrée d'air (6) et/ou dans l'échangeur de chaleur (7) et/ou dans la zone de mélange (9) et/ou dans le conduit d'évacuation des gaz d'échappement (11), de préférence dans l'entrée d'air (6) et/ou dans l'échangeur de chaleur (7) et/ou dans la zone de mélange (9).

13. Véhicule automobile comprenant une installation de gaz d'échappement (10) conforme à l'une des revendications précédentes.

14. Véhicule automobile conforme à la revendication 13,
**caractérisé en ce que**
l'échangeur de chaleur (7) est installé dans une partie arrière et/ou dans une partie latérale du véhicule et/ou la sortie des gaz mélangés (14) est installée dans une partie arrière et/ou dans une partie latérale du véhicule.
